# EUROPEAN PATENT APPLICATION

(11) **EP 4 622 336 A1**
(43) Date of publication of application: **24.09.2025**
(21) Application number: 23922429.8
(22) Date of filing: 24.11.2023
(51) Int. Cl.: H04W 28/06

(54) **DATA SET SENDING AND RECEIVING METHODS, ELECTRONIC DEVICE, AND STORAGE MEDIUM**

(30) Priority: 17.02.2023 CN 202310182825
(71) Applicant: ZTE Corporation, Shenzhen, Guangdong 518057 (CN)
(72) Inventor: WANG, Xiyu, Shenzhen, Guangdong 518057 (CN); LU, Zhaohua, Shenzhen, Guangdong 518057 (CN); XIAO, Huahua, Shenzhen, Guangdong 518057 (CN)
(74) Representative: Ziebig Hengelhaupt Intellectual Property Attorneys Patentanwaltskanzlei PartGmbB
(86) International application number: PCT/CN2023/134060
(87) International publication number: WO 2024/169313

(57) **Abstract**

Provided are data set sending and receiving methods, an electronic device, and a storage medium. The data set sending method comprises: acquiring a first data set and first signaling, the first data set comprising N samples, N being a positive integer; and sending the first data set on a first transmission resource determined from the first signaling.

## Description

The present disclosure claims a priority to Chinese Patent Application No. 202310182825.9, filed on February 17, 2023, which is hereby incorporated by reference in its entirety.

### TECHNICAL FIELD

The present disclosure relates to the field of communication technologies, and in particular, to data set sending and receiving methods, an electronic device, and a storage medium.

### BACKGROUND

Wireless communication systems are widely used in our lives and production areas, such as video transmission, voice transmission, positioning, machine-to-machine (M2M) communication in industrial field, device-to-device (D2D) communication, and communication from cars to other devices in the Vehicle to Everything (V2X). More and wider applications have also put forward increasingly higher requirements on the transmission reliability, capacity, transmission rate, etc., for the wireless communication technology, which has also promoted the rapid development of the wireless communication field. At present, applications of various advanced technologies (e.g., multi-antenna technology, Artificial Intelligence, Reconfigurable Intelligence Surface, etc.) in the wireless communication systems have also promoted the development of the wireless communication systems.

### SUMMARY

In a first aspect, there is provided a data set sending method, applied to a first node. The data set sending method includes:
acquiring a first data set and a first signaling, where the first data set includes N samples, N is a positive integer; and
sending the first data set on a first transmission resource determined according to the first signaling.

In a second aspect, there is provided a data set receiving method, applied to a first node. The data set receiving method includes:
receiving a sixth signaling; and
receiving a second data set on a third transmission resource determined according to the sixth signaling, where the second data set includes R samples, R is a positive integer.

In a third aspect, there is provided a data set receiving method, applied to a second node. The data set receiving method includes:
sending a first signaling; and
receiving a first data set on a first transmission resource determined according to the first signaling, where the first data set includes N samples, N is a positive integer.

In a fourth aspect, there is provided a data set sending method, applied to a second node. The data set sending method includes:
sending a sixth signaling; and
sending a second data set on a third transmission resource determined according to the sixth signaling, where the second data set includes R samples, R is a positive integer.

In a fifth aspect, there is provided a communication apparatus, located at a first node. The communication apparatus includes an acquisition unit, and a first sending unit;
the acquisition unit is configured to acquire a first data set and a first signaling, where the first data set includes N samples, N is a positive integer; and
the first sending unit is configured to send the first data set on a first transmission resource determined according to the first signaling.

In a sixth aspect, there is provided a communication apparatus, located at a first node. The communication apparatus includes a first receiving unit;
the first receiving unit is configured to receive a sixth signaling; and
the first receiving unit is configured to receive a second data set on a third transmission resource determined according to the sixth signaling, where the second data set includes R samples, R is a positive integer.

In a seventh aspect, there is provided a communication apparatus, located at a second node. The communication apparatus includes a second sending unit and a second receiving unit;
the second sending unit is configured to send a first signaling; and
the second receiving unit is configured to receive a first data set on a first transmission resource determined according to the first signaling, where the first data set includes N samples, N is a positive integer.

In an eighth aspect, there is provided a communication apparatus, located at a second node. The communication apparatus includes a third sending unit;
the third sending unit is configured to send a sixth signaling; and
the third sending unit is further configured to send a second data set on a third transmission resource determined according to the sixth signaling, where the second data set includes R samples, R is a positive integer.

In a ninth aspect, there is provided a communication system, the communication system includes at least one first node and at least one second node, a first node is configured to perform the method according to any aspect of the above-mentioned first aspect and second aspect, and a second node is configured to perform the method according to any aspect of the above-mentioned third aspect and fourth aspect.

In a tenth aspect, there is provided an electronic device. The electronic device includes a processor and a memory, and the memory is coupled to the processor. The memory is configured to store instructions executable for the processor; and the processor is configured, upon the instructions being executed, to perform the method according to any aspect of the above-mentioned first aspect to the fourth aspect.

In an eleventh aspect, there is provided a computer-readable storage medium. The computer-readable storage medium stores computer instructions, when the computer instructions are run on a computer, the computer is enabled to perform the method according to any aspect of the above-mentioned first aspect to the fourth aspect.

In a twelfth aspect, there is provided a computer program product containing computer instructions. When the computer instructions are run on a computer, the computer is enabled to perform the method according to any aspect of the above-mentioned first aspect to the fourth aspect.

### BRIEF DESCRIPTION OF THE DRAWINGS

FIG. 1 is a schematic diagram of an architecture of a communication system according to some embodiments.
FIG. 2 is a flowchart of a data set sending method according to some embodiments.
FIG. 3 is a flowchart of a data set receiving method according to some embodiments.
FIG. 4 is a flowchart of another data set receiving method according to some embodiments.
FIG. 5 is a flowchart of another data set sending method according to some embodiments.
FIG. 6 is a schematic diagram of a communication apparatus according to some embodiments.
FIG. 7 is a schematic diagram of another communication apparatus according to some embodiments.
FIG. 8 is a structural schematic diagram of yet another communication apparatus according to some embodiments.

### DETAILED DESCRIPTION

In order to enable those skilled in the art to better understand the technical solutions in the present disclosure, the technical solutions in the embodiments of the present disclosure will be described clearly and completely in conjunction with the accompanying drawings. Obviously, the described embodiments are merely a part of embodiments of the present disclosure, but not all of the embodiments of the present disclosure. All other embodiments obtained based on the embodiments of the present disclosure by those of ordinary skill in the art without paying any creative effort shall belong to the protection scope of the present disclosure.

It should be noted that all orientation indications (such as up, down, left, right, front, back, etc.) in the embodiments of the present disclosure are only used to explain relative position relationships, motion situations, etc., between various components under a certain specific posture (such as shown in an accompanying drawing). If the specific posture is changed, an orientation indication is correspondingly changed accordingly.

The terms "first", "second", etc., are merely used for a purpose of description, and are not to be understood as indicating or implying the relative importance or implicitly indicating the number of indicated technical features. Thus, features limited with the wordings of "first", "second", etc., may explicitly or implicitly include one or more of the features. In the description of the present disclosure, the terms "multiple", "a plurality of" or "the plurality of" mean a number of two or more than two.

In the embodiments of the present disclosure, wordings such as "exemplarily" or "for example" and variations thereof are used to represent examples, instances, or illustrations. Any embodiment or design solution described in the embodiments of the present disclosure with wordings such as "exemplarily" or "for example" should not be illustrated as being more preferred or advantageous over other embodiments or design solutions. Specifically, the usage of wordings such as "exemplarily" or "for example" is intended to present relevant concepts in a concrete way.

The technical solution provided in the embodiments of the present disclosure may be applied to various mobile communication networks, for example, new radio (NR) mobile communication networks using the 5th generation mobile networks (5G), future mobile communication networks, or multiple communication convergence systems, etc., which is not limited in the embodiments of the present disclosure.

A network architecture of a mobile communication network (including but not limited to 3G, 4G, 5G and future mobile communication networks) in the embodiments of the present disclosure may include a network-side device (for example, including but not limited to a base station) and a receiving-side device (for example, including but not limited to a terminal). And it should be understood that, in this example, in a downlink, a first communication node (also referred to as a first communication node device) may be a base station side device, and a second communication node (also referred to as a second communication node device) may be a terminal side device. Of course, in an uplink, the first communication node may also be a terminal side device, and the second communication node may also be a base station side device. In a case where two communication nodes are in a device-to-device communication, both the first communication node and the second communication node may be base stations or terminals. The first communication node and the second communication node may be referred to as the first node and the second node for short, respectively.

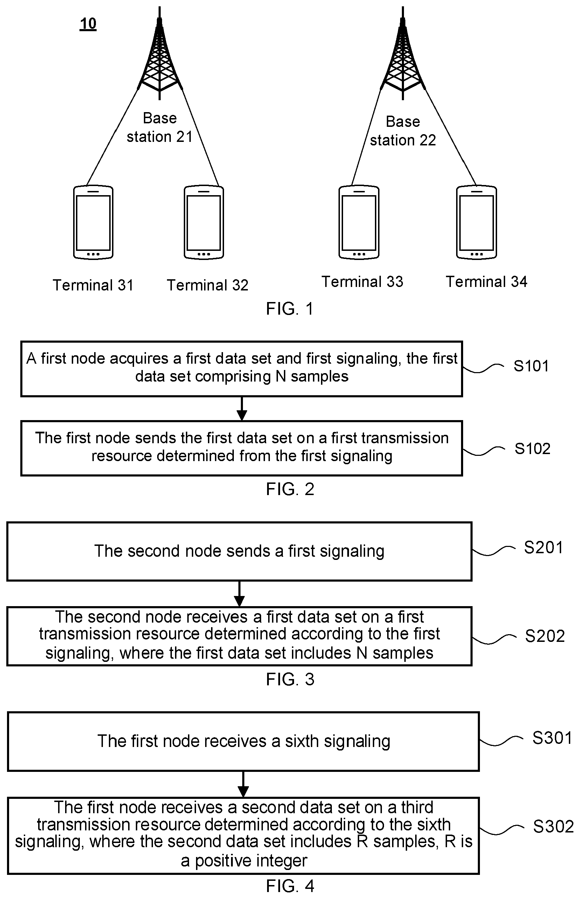

Exemplarily, taking a network side device as a base station and a receiving side device as a terminal as an example, FIG. 1 shows a schematic diagram of an architecture of a communication system according to some embodiments. As shown in FIG. 1, the communication system 10 includes a plurality of base stations (e.g., a base station 21 and a base station 22) and a plurality of terminals (e.g., a terminal 31, a terminal 32, a terminal 33, and a terminal 34). The plurality of base stations and the plurality of terminals may be in communication connection.

In some embodiments, a base station is configured to provide wireless access services to the plurality of terminals. A base station provides a service coverage area (also referred to as a cell). Terminals entering this area may communicate with the base station via wireless signals to receive wireless access services provided by the base station. There may be an overlap between service coverage areas of the base station 21 and the base station 22, and a terminal in the overlapped area may receive wireless signals from the plurality of base stations.

In some embodiments, a base station may be connected to the plurality of terminal devices, for example, the base station 21 is connected to the terminal 31 and the terminal 32. The terminal 31 and the terminal 32 may be located in a same cell, or the terminal 31 and the terminal 32 may be located in different cells. That is, a base station may provide network services to terminals in a cell, and may further provide network services to terminals in a plurality of cells at the same time.

In some embodiments, a base station may be a base station or an evolutional base station (e.g., an evolutional node B (eNB or eNodeB)) in long-term evolution (LTE), long-term evolution advanced (LTE-A), a base station device in a 5G network, or a base station in a future communication system, etc. The base station may include various macro base stations, micro base stations, home base stations, wireless remote devices, reconfigurable intelligent surfaces (RISs), routers, wireless fidelity (WIFI) devices, or various network-side devices such as primary cells and secondary cells.

In some embodiments, a terminal may be a device with wireless transceiver functions, which may be deployed on land, including indoors or outdoors, handheld, wearable or vehicle-mounted; may further be deployed on the water surface (such as on ships, etc.); may further be deployed in the air (for example, on airplanes, balloons and satellites, etc.). The terminal may be a mobile phone, a pad, a computer with wireless transceiver functions, a virtual reality (VR) terminal, an augmented reality (AR) terminal, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. The terminal, sometimes, may also be referred to as a user, a user equipment (UE), an access terminal, a UE unit, a UE station, a mobile station, a mobile platform, a remote station, a remote terminal, a mobile device, a UE terminal, a wireless communication device, a UE agent, a UE apparatus, etc., which is not limited in the embodiments of the present disclosure.

In some embodiments, a high-layer signaling includes, but is not limited to a radio resource control (RRC) signaling, a media access control control element (MAC CE) signaling, and other high-layer signalings above the physical layer. A physical layer signaling includes, but is not limited to: downlink control information and uplink control information. In an embodiment, the physical layer signaling may be transmitted between the base station and the terminal on a physical downlink control channel (PDCCH) and on a physical uplink control channel (PUCCH).

In some embodiments, an indicator of a parameter may also be referred to as an index or an identifier (ID), and the concepts of indicator, identifier and index are equivalent. For example, a resource identifier of a wireless system may also be referred to as a resource indicator or a resource index. The resource identifier of the wireless system includes, but is not limited to one of the following: identifiers corresponding to a reference signal resource, a reference signal resource group, a reference signal resource configuration, a channel state information (CSI) report, a CSI report set, a terminal, a base station, a panel, a neural network, a sub-neural network, a neural network layer, etc. The base station may indicate an identifier of a resource or a group of resources to the terminal through various high-layer signalings or physical layer signalings.

In some embodiments, a slot may be a slot or a mini slot. A slot or a subslot includes at least one symbol. A symbol refers to a time unit for a subframe or a frame or a slot. For example, a symbol may be an orthogonal frequency division multiplexing (OFDM) symbol, a single-carrier frequency division multiple access (SC-FDMA) symbol, or an orthogonal frequency division multiple access (OFDMA) symbol.

In some embodiments, a transmission includes sending or reception. For example, the transmission includes sending of data or signals, and reception of data or signals.

In some embodiments, in order to calculate channel state information or perform channel estimation, mobility management, positioning, etc., the base station or a user needs to send a reference signal (RS), the reference signal includes, but is not limited to a Channel-State Information reference signal (CSI-RS), CSI-RS includes Zero Power CSI-RS (ZP CSI-RS) and Non-Zero Power CSI-RS (NZP CSI-RS), Channel-State Information-Interference Measurement signal (CSI-IM), Sounding Reference Signal (SRS), Synchronization Signals Block (SSB), Physical Broadcast Channel (PBCH), Synchronization Signal Block/Physical Broadcast Channel (SSB/PBCH). NZP CSI-RS may be used to measure a channel or interference. CSI-RS may also be used for tracking, which is called tracking reference signal (e.g., a CSI-RS for Tracking, TRS). CSI-IM is generally used to measure interference, and SRS is used to measure an uplink channel. In addition, a set of resource elements (RE) included in a time-frequency resource for transmitting a reference signal is referred to as a reference signal resource, for example, a CSI-RS resource, an SRS resource, a CSI-IM resource, and an SSB resource. In the document, SSB includes a synchronization signal block and/or a physical broadcast channel.

In some embodiments, in order to save signaling overhead, etc., multiple reference signal resources may be divided into multiple sets (e.g., a CSI-RS resource set, a CSI-IM resource set, an SRS resource set), and a reference signal resource set includes at least one reference signal resource, and multiple reference signal resource sets may all come from a same reference signal resource setting (e.g., a CSI-RS resource setting, an SRS resource setting, where the CSI-RS resource setting may be merged with the CSI-IM resource setting, which are both referred to as the CSI-RS resource setting) to configure parameter information.

In some embodiments, the base station configures measurement resource information, and the measurement resource information is used to acquire channel state information. The measurement resource information includes CN pieces of Channel Measurement Resource (CMR) information and/or CM pieces of Interference Measurement Resource (IMR) information, where CN and CM are positive integers. The base station configures measurement resource information in a report configuration (report config) or a reporting setting. In some embodiments, a piece of channel measurement resource information includes at least one channel reference signal resource setting, for example, at least one CSI-RS resource setting or at least one SRS resource setting. A piece of interference measurement resource information includes at least one interference reference signal resource setting, for example, at least one CSI-IM resource setting. In some embodiments, a piece of channel measurement resource information includes at least one channel reference signal resource set, for example, at least one CSI-RS resource set or at least one SRS resource set. A piece of interference measurement resource information includes at least one interference reference signal resource set, for example, at least one CSI-IM resource set. In some embodiments, a piece of channel measurement resource information includes at least one channel reference signal resource, for example, at least one CSI-RS resource or at least one SRS resource. A piece of interference measurement resource information includes at least one interference reference signal resource, for example, at least one CSI-IM resource.

In some embodiments, a beam includes a sending beam, a receiving beam, a pair of a receiving beam and a sending beam and a pair of a sending beam and a receiving beam. In some embodiments, a beam may be understood as a kind of resource, for example, a reference signal resource, a transmitting end spatial filter, a receiving end spatial filter, a spatial filter, a spatial receiving parameter, a transmitting end precoding, a receiving end precoding, an antenna port, an antenna weight vector , an antenna weight matrix, etc. A beam index may be replaced by a resource index (e.g., a reference signal resource index), as the beam may be bundled with some time-frequency code resources for transmission. A beam may also be a transmission (sending/receiving) mode; the transmission mode may include space division multiplexing, frequency domain/time domain diversity, beamforming, etc. In addition, the base station may perform quasi co-location (QCL) configuration for two reference signals, and inform a user end to describe a channel characteristic hypothesis. Parameters involved in the Quasi-co-location at least include: Doppler spread, Doppler shift, delay spread, average delay, average gain and spatial parameter (Spatial Rx parameter, or Spatial parameter); the spatial parameter may include spatial reception (Rx) parameters, angle information, spatial correlation of a receiving beam, an average delay, and correlation of time-frequency channel response (including phase information). The angle information may include at least one of the following: angle of arrival (AOA), angle of departure (AOD), zenith angle of departure (ZOD), and zenith angle of arrival (ZOA). The spatial domain filtering may be at least one of the following: a DFT vector, a precoding vector, a DFT matrix, a precoding matrix, or a vector formed by a linear combination of multiple DFTs, or a vector formed by a linear combination of multiple precoding vectors. In some embodiments, the concepts of phasor and vector are interchangeable. In some embodiments, a beam pair includes a combination of a sending beam and a receiving beam.

In some embodiments, Artificial Intelligence (AI) includes a device, a component, software, and a module with self-learning capabilities such as Machine learning (ML), deep learning, reinforcement learning, transfer learning, deep reinforcement learning, meta-learning. In some embodiments, the artificial intelligence is implemented through an artificial intelligence network (or referred to as a neural network). A neural network includes multiple layers, and each layer includes at least one node. In an embodiment, the neural network includes an input layer, an output layer, and at least one hidden layer. Each layer of the neural network uses a layer including, but is not limited to at least one of a fully-connected layer, a dense layer, a convolutional layer, a transposed convolutional layer, a direct connection layer, an activation function, a normalization layer, a pooling layer, etc. In some embodiments, each layer of the neural network may include a sub-neural network, such as a residual network block (or also referred to as resnet block), a dense network (e.g., a densenet block), a recurrent neural network (RNN), etc. The artificial intelligence network may be implemented through a model, where the model may include a neural network model. The neural network model includes a neural network model structure and/or a neural network model parameter. The neural network model structure may be referred to as a model structure for short, and the neural network model parameter may be referred to as a network parameter or a model parameter for short. A model structure defines network architectures, such as a layer number of neural network, a size of each layer, the activation function, a connection situation, a size of a convolution kernel and a convolution stride, a convolution type (e.g., 1D convolution, 2D convolution, 3D convolution, hollow convolution, transposed convolution, separable convolution, grouped convolution, extended convolution, etc.), while the network parameters are weights and/or biases and values of each layer in the neural network model. A model structure may correspond to multiple sets of values of different neural network model parameters to adapt to different scenarios. The neural network model parameter is obtained through online training or offline training. For example, by inputting at least one sample and label, the neural network model is trained to obtain the neural network model parameters.

In some embodiments, a sample includes P features and Q labels. P is a positive integer, and Q is an integer greater than or equal to 0. Multiple samples constitute a data set. In some embodiments, a sample includes a feature and a label, such as a sample in supervised learning. In an embodiment, a sample has only one feature and no label, for example, a sample for unsupervised learning. In some embodiments, a sample has multiple features and a label, for example, a sample of a multi-input single-output supervised learning network model. In some embodiments, a sample includes a feature and multiple labels, for example, a sample in a single-input multiple-output supervised learning network model. In some embodiments, a sample includes multiple features and multiple labels, for example, a sample in a multi-input multi-output supervised learning network model. In some embodiments, a feature may be an array. In some embodiments, a label is also an array. The array may be a vector or a matrix, or a tensor with dimensions larger than two dimensions. The dimension of the array corresponding to the sample is also called the dimension of the sample array. Each element in the array may be a discrete value, or may also be a real value, or a real value from 0 to 1, or a real value from (-0.5) to 0.5, or the like. The array corresponding to the sample may include two arrangement types, a row-first arrangement type and a column-first arrangement type. In a row-first arrangement type, elements in the array are arranged in a first row, then a second row, and so on. In a column-first arrangement type, the elements in the array are arranged in a first column, then a second column, and so on. It should be noted that, in some embodiments, the elements in the array corresponding to the sample may be quantized, and different numbers of quantization bits may obtain samples with different quantization precisions, which is called a sample quantization accuracy.

In some embodiments, it is necessary to perform normalization on the elements in the array corresponding to a label or feature, to facilitate faster convergence of the network model. Normalization refers to normalizing values of elements in an array to a value within a range greater than or equal to a and less than or equal to b. There are multiple types of normalization for samples, for example, in an embodiment, a=(-0.5), b=0.5. In an embodiment, a=0, b=1. In an embodiment, normalization is implemented by dividing the elements in the array by a value with a highest absolute value among values of the elements in the array. In an embodiment, normalization is implemented by dividing the elements in the array by a variance of the elements in the array. In an embodiment, normalization is implemented by dividing the elements in the array by a fixed value (e.g., a maximum value among the values of all elements in the array). In an embodiment, normalization is implemented by dividing the elements in the array by a statistical value (e.g., a statistical variance of all elements in all samples). For values of indexes (such as a beam index, CRI, SSBRI, etc.), normalization may be implemented through One-Hot Encoding.

In some embodiments, a model refers to a data flow between an original input of a sample and an output target passing through multiple linear or nonlinear components. The model includes a neural network model, a non-artificial intelligence module for processing information or corresponding model thereof, and a functional component or function for mapping input information to output information (the mapping herein includes linear mapping and nonlinear mapping).

In some embodiments, each model corresponds to a model indicator (Model ID) or a model identity (Model ID). In some embodiments, the model identifier may also have one of the following other equivalent names or concepts: a model index, a first identifier, a function identifier, a model indicator, etc.

In some embodiments, the model includes a model structure and model parameters. For example, the model is a neural network model, and the neural network model includes a neural network model structure and neural network model parameters, which are respectively used to describe the structure of the neural network and the parameter values of the neural network. A neural network model structure may correspond to multiple neural network model parameters, that is, neural network model structures may be the same, but corresponding neural network model parameter values may be different.

In some embodiments, in order to better transmit data or signals, the base station or the terminal needs to acquire measurement parameters. The measurement parameters may include channel state information or other parameters for characterizing the channel. The channel state information may include at least one of the following: channel state information-reference signal resource indicator (CSI-RS Resource Indicator, CRI), synchronization signal block resource indicator (SSBRI), layer 1 reference signal received power (L1 Reference Signal Received Power, L1-RSRP or RSRP), differential RSRP; layer 1 reference signal signal-to-interference noise ratio (e.g., L1 Signal-to-Interference Noise Ratio, L1-SINR or SINR), differential L1-SINR; reference signal received quality (RSRQ), channel quality indicator (CQI), precoding matrix indicator (PMI), layer indicator (LI), rank indicator (RI), and precoding information. The precoding information includes first-type precoding information (e.g., codebook-based precoding information). A precoding matrix indicator is one type of the codebook-based precoding information. The precoding information further includes a manner based on non-codebook implementation (e.g., a second-type precoding information, such as precoding information obtained based on technologies such as AI).

In some embodiments, the channel information is information (such as a time domain channel matrix, a frequency domain channel matrix) obtained according to a reference signal (e.g., CSI-RS) for describing a channel environment between communication nodes. In some embodiments, the channel information is a complex matrix, and a size of a channel matrix is related to a number of transmitting antennas Nt, a number of receiving antennas Nr, and resource elements (REs). For example, there is at least one Nr*Nt channel matrix on a physical resource block.

In some embodiments, beam parameter information is a layer 1 reference signal received power (L1 Reference Signal Received Power, L1-RSRP or RSRP), or a differential RSRP corresponding to at least one beam. In some embodiments, the beam parameter information is a layer 1 reference signal signal-to-interference noise ratio (e.g., L1 Signal-to-Interference Noise Ratio, L1-SINR or SINR), or a differential SINR corresponding to at least one beam. In some embodiments, the beam parameter information is a reference signal received quality (RSRQ) corresponding to at least one beam. In some embodiments, the beam parameter information is a beam angle (at least one of AOA, ZOA, AOD, ZOD, etc., also referred to as an Azimuth angle of Arrival (AOA), a vertical angle of arrival, an Azimuth angle of Departure (AOD), vertical angle of departure, respectively) corresponding to at least one beam. In some embodiments, the beam parameter information is a sending beam index corresponding to at least one beam. In some embodiments, the beam parameter information is a receiving beam index corresponding to at least one beam. In some embodiments, the beam parameter information is a pair index of a sending beam and a receiving beam (referred to as a beam pair index or beam pair for short) corresponding to at least one beam. In some embodiments, the beam parameter information is a beam domain receive power map (BDRPM) corresponding to at least one beam. In some embodiments, the beam parameter information is a channel state information reference signal resource indicator (CSI-RS Resource Indicator, CRI) corresponding to at least one beam. In some embodiments, the beam parameter information is a synchronization signal block resource indicator (SSBRI) or other reference signal resource indicator (e.g., a sounding reference signal resource indicator (SRS Resource Indicator, SRSRI)) corresponding to at least one beam. In some embodiments, the beam parameter information is a combination of at least two of the following beam parameter information corresponding to at least one beam: RSRP, RSRQ, SINR, beam angle, sending beam index, receiving beam index, beam pair index, CRI, SSBRI, etc. In some embodiments, the beam parameter information is a linear value of one of RSRP, RSRQ, and SINR. In some embodiments, the beam parameter information is a logarithmic value or a decibel value (dB) of one of RSRP, RSRQ, and SINR.

In some embodiments, the beam parameter information is a subset of the channel state information, that is, the beam parameter information is the channel state information.

In some embodiments, in order to transmit channel state information at a physical layer, the terminal and base station define a CSI report (a CSI report or a CSI report congfig), where the CSI report defines at least one of the following parameters: a time-frequency resource for feeding back CSI, a report quality included in CSI (report Quantity), a time-domain category fed back by CSI (report ConfiguraType), a channel measurement resource, an interference measurement resource, a measured bandwidth size, and other information. The CSI report may be transmitted on an uplink transmission resource, where the uplink transmission resource includes a PUSCH and a PUCCH, and the CSI report also includes time domain characteristics, including periodic CSI report (P-CSI), aperiodic CSI report (AP-CSI), and semi-persistent CSI report (SP-CSI). Generally speaking, a number of bits transmitted by P-CSI is relatively small, and is transmitted on the PUCCH; a number of bits transmitted by A-CSI is relatively larger, and is generally transmitted on the PUSCH, while the SP-CSI may be transmitted based on the PUSCH, or may also be transmitted based on the PUCCH. P-CSI transmitted based on PUCCH is generally configured by a high-layer signaling (e.g., a Radio Resource Control (RRC)), and SP-CSI transmitted based on PUCCH is also configured, activated or deactivated by a high-layer signaling (e.g., an RRC and/or an MAC CE), while SP-CSI transmitted based on PUSCH is activated or deactivated by a physical layer signaling (e.g., downlink control information (DCI)). A-CSI is triggered by DCI. While the DCI is generally transmitted on a physical downlink control channel (PDCCH).

In some embodiments, the base station configures NC reports (e.g., CSI reports) that need to be fed back to the base station for the terminal through a high-layer signaling and/or a physical layer signaling. Each report has an identity (ID), which is called as a report identifier (e.g., a CSI report ID). The terminal may select MC reports from the NC reports based on its own computing power or processing power and the requirements of the base station. And according to an uplink feedback resource, at least one report among the MC reports is fed back, where NC and MC are positive integers, and MC<=NC. In the embodiments of the present disclosure, a feedback CSI may also be referred to as a transmission CSI or a sending CSI, for example, the channel state information is carried on an uplink transmission resource for feedback or transmission. The uplink transmission resource and a corresponding CSI are both indicated by a channel state information report. In the embodiments of the present disclosure, feeding back or transmitting a report refers to feeding back transmission contents (e.g., channel state information) corresponding to the report. In an embodiment, feeding back or transmitting a report refers to transmitting contents that needs to be transmitted and configured by the transmission resource transmission report.

In some embodiments, an uplink transmission resource is allocated (or scheduled) for the first node through a high-layer signaling and/or a physical-layer signaling, where the uplink transmission resource is used to transmit uplink data (e.g., channel state information or a data set). There are two manners to allocate (or schedule) an uplink transmission resource for the first node through the high-layer signaling and/or physical layer signaling, i.e., a dynamic grant (DG) manner (also referred to as dynamically allocating resources) and a configured grant (CG) manner. The configured grant includes two types, including Configured Grant Type1 (or referred to as first-type configured grant) indicated by a high-layer signaling and Configured Grant Type2 (or referred to as second-type configured grant) indicated by a high-layer and physical layer signaling, and the dynamic grant manner is indicated by a physical layer signaling. In some embodiments, the terminal transmits data by parameters determined by the Configured Grant Type1. The base station transmits parameters (such as a time-frequency resource position of Configured Grant Type1, a period of CG resources, a number of hybrid automatic repeat request (HARQ) processes using CG resources, and the modulation and coding scheme (MCS)) to the terminal through an RRC signaling, and the terminal stores the parameters as a configured uplink grant. After the RRC signaling configures Configured Grant Type1, the terminal may use a transmission resource corresponding to the configured grant for uplink data transmission. In some embodiments, the terminal transmits data by parameters determined by Configured Grant Type2. The base station transmits parameters (such as a period of CG resources of Configured Grant Type2, a number of HARQ processes using CG resources, and which MCS table to use) to the terminal through an RRC signaling. However, the time-frequency resource position, MCS index value, etc., are transmitted to the terminal by the base station through DCI, and stored by the terminal as configured uplink grant. The base station activates or deactivates the terminal's operation for transmitting uplink data through a physical layer signaling.

In some embodiments, a downlink transmission resource is allocated (or scheduled) for the first node through a high-layer signaling and/or physical layer signaling, and a downlink transmission resource is used to transmit downlink data (e.g., a data set or other related data transmitted through PDSCH). There are two manners to allocate (or schedule) the downlink transmission resource for the first node through a high-layer signaling and/or a physical layer signaling, i.e., a dynamic grant (DG) manner indicated by a physical layer signaling (also referred to as dynamically allocating resources) and a semi-persistent scheduling (SPS) manner. DG is indicated through a physical layer signaling. The SPS is indicated through a high-layer signaling and a physical layer signaling. In an embodiment, the base station transmits parameters (such as a time-frequency resource position of the SPS, a scheduling period, a number of hybrid automatic repeat request (HARQ) processes, a modulation and coding scheme (MCS)) to the terminal through an RRC signaling, and the terminal saves the information. The base station activates or deactivates the terminal's operation for receiving downlink data through the physical layer signaling.

In an embodiment, the terminal transmits a data set through a first transmission resource indicated by a first signaling (including DG or CG). The base station receives the data set on the first transmission resource. In an embodiment, the base station transmits the data set through a third transmission resource indicated by a third signaling (including DG or SPS). The terminal receives the data set on the third transmission resource. In some embodiments, the data set is sent or received on a first transmission resource or a second transmission resource by a manner of a higher layer signaling (e.g., an RRC signaling). In some embodiments, the data set is sent or received on the first transmission resource or the second transmission resource by a manner of a physical layer report (e.g., a CSI report).

In some instances, location information includes, but is not limited to, at least one of: transmission time related information, angle related information, received reference signal quality related information, multipath related information, and coordinates (including absolute coordinates and relative coordinates) of the first node.

In some embodiments, the transmission time related information includes at least one of: time of arrival (TOA), reference signal time difference (RSTD), relative time of arrival (RTOA), receive-transmit time difference (Rx-Tx time difference), and transmit-transmit time difference (Tx-Rx time difference).

In some embodiments, the angle related information includes at least one of: an angle of arrival, an angle of departure, a vertical angle of arrival, and a horizontal angle of departure. The angle of departure includes a vertical angle of departure, and a horizontal angle of departure.

In some embodiments, the received reference signal quality related information includes at least one of: Reference Signal Received Power (RSRP or L1-RSRP), SINR (or L1-SINR), CQI, SNR, RSRQ.

In some embodiments, the multipath information includes, but is not limited to at least one of: increasing a number of paths, increasing a relative delay of the paths, increasing a power of multipath, increasing time domain response of the multipath, increasing a real part and an imaginary part of the time domain response of the multipath, a path with a strongest power, a first path, N paths with a strongest power, a moment and/or RSRP corresponding to the N paths with the strongest power, the N paths within a time window, a moment and/or RSRP corresponding to the N paths within the time window, the N paths greater than a threshold, a moment and/or RSRP corresponding to the N paths greater than a threshold, and a line-of-sight or non-line-of-sight indicator (LoS/NLoS indicator).

In some embodiments, a confidence may be a credibility of a model output result. In an embodiment, the confidence is a probability value, indicating a probability that an output of the model is a certain label. In an embodiment, the confidence is a degree of similarity between an output of the model and a label, which may be represented by a cosine similarity (or a distance or a normalized minimum mean square error, etc.) between the output of the model and the label.

In some embodiments, an antenna is a physical antenna. In some embodiments, the antenna is a logical antenna. In some embodiments, concepts of a port and an antenna may be interchangeable. In some embodiments, the antenna is a sending antenna. In some embodiments, the antenna is a receiving antenna. In some embodiments, the antenna includes an antenna pair of a sending antenna and a receiving antenna. In some embodiments, the antenna may be a uniform linear array. In some embodiments, the antenna is a uniform planar array (e.g., including Ng rows and Mg columns of array elements/antennas, where Ng and Mg are positive integers). In some embodiments, the antenna is a uniform circular array. In some embodiments, the antenna may be a non-uniform linear array. In some embodiments, the antenna is a non-uniform planar array. In some embodiments, the antenna is a non-uniform circular array. In some embodiments, the antenna is a directional antenna, and in some embodiments, the antenna is an omnidirectional antenna. In some embodiments, the antenna is a dual polarized antenna. In some embodiments, the antenna is a single polarized antenna.

As shown in FIG. 2, a data set sending method is provided in the embodiments of the present disclosure, and the method includes S101-S102.

In S101, a first node acquires a first data set and a first signaling, where the first data set includes N samples.

N is a positive integer. In some embodiments, a value of N is determined based on at least one of: a capability of the first node, a cache size, computing power, sample quantization accuracy, an MCS, a reference signal transmission period, a transmission period of the first transmission resource, or a network side signaling. MCS is a modulation and coding scheme used for encoding the first data set. The capability of the first node includes a capability to acquire data sets, a capability of data processing, a transmission rate, etc. A network side signaling may also be referred to as a signaling of a second node, which is used to carry the value of N, and is sent to the first node through the second node. In an embodiment, the reference signal transmission period is T1, and the transmission period of the first transmission resource is T2, then N is floor(T2/T1), where floor means rounding data.

In addition, the above-mentioned sample includes P features and/or Q labels, where P is a positive integer and Q is an integer greater than or equal to 0.

In some embodiments, a feature and/or a label of the sample include channel matrix information, or the feature and/or label of the sample include one of the channel state information, or the feature and/or label of the sample includes one of the beam measurement parameters.

In some embodiments, the label of the sample may include position coordinates or other position parameter information (such as at least one of TOA, RSTD, LoS/NLoS indicator or angle information) in positioning. In some embodiments, the label of the sample may further include beam measurement parameters (e.g., at least one of L1-SINR, L1-RSRP, CRI, SSBRI, etc.) in beam management. In some embodiments, the label of the sample may further be channel state information, such as channel information or a feature vector. In some embodiments, the label of the sample may further be a channel matrix on a subcarrier in channel estimation.

In some embodiments, the second node may send a reference signal to the first node; the first node receives the reference signal and acquires a corresponding feature and a label according to the received reference signal, thereby acquiring one or more samples, and at least one sample is combined into a data set. In the data set, N samples are selected to obtain a first data set. In an embodiment, the N samples are a number of samples that the terminal can send at one time on a first transmission resource.

For example, taking the second node being a base station and the first node being a terminal as an example, the base station sends a reference signal to the terminal; the terminal obtains channel matrix information H of a plurality of physical resource blocks by measuring the reference signal, and then acquires the above-mentioned plurality of samples. Exemplarily, the terminal may obtain a feature vector V or a quantized value of the feature vector V of each sub-band according to the channel matrix information. V is a complex matrix of Nt*Ns, Nt is a number of sending antennas, and Ns is a rank of the channel matrix. It should be noted that, in order to efficiently feed back V or H of the above-mentioned plurality of sub-bands, it is necessary to compress the V or H through an encoder, so as to feed back channel state information compressed by the encoder to the base station. Further, the base station receives the channel state information, and decompresses the channel state information through a decoder on the base station side, so as to obtain decoded V or H. In order to achieve good performance of the encoder and decoder, samples are needed to train or fine tune the encoder and decoder. Furthermore, the samples used for training or fine-tuning a model have high-quality labels and/or features to improve training accuracy. The higher the similarity between a quality of a label of a sample and V or H obtained under ideal conditions, the better. For high-precision or high-quality labels, a number of quantized bits is relatively large, which requires a large feedback overhead. Exemplarily, a quality of a label may be affected by a position of the first node in a cell. For example, in a case where the first node is at a center of a cell, a channel quality is good, and a corresponding label quality is also good; in a case where the first node is at an edge of the cell, the channel quality is poor, and since obtained channel information is interfered, the corresponding label quality is also poor. In addition, a quality of a feature of the sample may be affected by interference or noise, a quantification accuracy of a collection device, a measurement accuracy of the collection device, etc.

In another example, the terminal sends an uplink reference signal, such as an SRS. The base station obtains the channel information by receiving the SRS, and obtains V or H on each sub-band or their quantized values accordingly according to the channel information, and uses the V or H on each sub-band as one or more samples. A large data set may be obtained by collecting samples from different terminals.

In another example, the base station or the terminal obtains time domain channel information or frequency domain channel information as a feature through a received reference signal, and location information of the terminal as a label, thus a sample is formed. The base station or the terminal constructs a data set by collecting samples of one or more users at different moments and/or different positions.

In another example, the base station or the terminal obtains L1 pieces of beam parameter information as a label through a reference signal corresponding to received L1 beams, and selects L2 pieces of beam parameter information in the L1 beam parameter information as a feature, thus to construct a sample. A data set is formed by collecting samples from one or more terminals at different moments and/or different positions. L2 and L1 are positive integers, and L2 is less than or equal to L1.

The data set in the embodiments of the present disclosure is also referred to as a datum set, a data aggregation or a datum aggregation, which is a kind of set consisting of one or more samples. In some embodiments, the base station makes one or more received first data sets (including N samples) to form a large data set, and stores the large data set locally, or transmits the large data set to a third-party data set storage server. When the base station and/or terminal need(s) to train the model, R samples are taken from the large data set. In order to distinguish the large data set from the above-mentioned first data set, a data set including R samples is referred to as a second data set, where R is a positive integer. In some embodiments, in order to improve the efficiency of model training, the base station may screen samples according to one or more items in description information of the samples, screen out R samples that meet the requirements of the terminal, and send the description information to the terminal. In some embodiments, during a process of model training or model testing, all or a portion of the samples in a large data set consisting of one or more first data sets may be applied, which is not limited thereto.

In some embodiments, the first node may acquire a plurality of samples at different moments and/or different positions, and construct the first data set based on N samples at different moments and/or different positions.

In some embodiments, the first signaling may be a high-layer and/or physical layer signaling. The first signaling is used to indicate or schedule a first transmission resource for the first node. Thus, the first node receives the first signaling, and based on the above-mentioned first signaling, determines the first transmission resource (including but not limited to a time-frequency position, a transmission period, a used MCS, a HARQ and other information of the first transmission resource) for sending the first data set to the second node.

In S102, the first node sends the first data set on a first transmission resource determined according to the first signaling.

In some embodiments, the first node may send the first data set on the first transmission resource determined based on a dynamic grant manner, a manner of the first-type configured grant, or a manner of the second-type configured grant.

### Manner 1: Dynamic Grant

In some embodiments, the first signaling is a physical layer signaling (e.g., DCI), that is, the first transmission resource is dynamically scheduled or granted through a physical layer signaling. Based on this, the first node sends a resource scheduling request (SR) information, where the resource scheduling request information is used to request a first transmission resource.

Exemplarily, after the first node collects the first data set, the first node may send an SR request to the second node. After the second node receives the SR request, the second node allocates the first transmission resource (i.e., a wireless transmission resource which may be used when the first node sends the first data set, such as a time-frequency position, an MCS and other information of the first transmission resource) for the first node through DCI, and approves the sending. Furthermore, the first node receives the DCI and sends the first data set to the second node through the designated first transmission resource.

### Manner 2: First-type Configured Grant

In some embodiments, the first signaling is a high-layer signaling.

Exemplarily, the second node configures information (such as the time-frequency resource position, a period of transmission resources, a number of used hybrid automatic repeat request processes, a modulation and coding scheme) for the first node based on the first signaling. The first node receives the first signaling and determines the first transmission resource by acquiring the first signaling, so as to send the first data set to the second node. This manner of scheduling or allocating a transmission resource is referred to as the manner of first-type configured grant.

### Manner 3: Second-type Configured Grant

In some embodiments, the first signaling is a high-layer and physical layer signaling. The second node may configure the information (such as the time-frequency resource position, the period of transmission resources, the number of used hybrid automatic repeat request processes, the modulation and coding scheme) for the first node through a high-layer signaling RRC, and when necessary, the second node sends a fourth signaling (a physical layer signaling). The fourth signaling is used to activate or deactivate the above-mentioned first transmission resource. Exemplarily, the fourth signaling takes a third value or a third combined value of multiple fields of the DCI, which is used to indicate to activate the above-mentioned first transmission resource. The fourth signaling takes a fourth value or a fourth combined value of multiple fields of the DCI, which is used to indicate to activate the above-mentioned first transmission resource. The first node determines the first transmission resource by receiving the high-layer signaling and the physical layer signaling, and transmits the first data set on the first transmission resource. This manner of scheduling or allocating a transmission resource is referred to as the manner of second-type configured grant.

Exemplarily, the second node configures the information (such as the period of transmission resources, the number of HARQ processes of the transmission resources, the MCS used by the transmission resources, the time-frequency resource position, an MCS index value) for the first node based on the high-layer signaling, and the first node determines configuration information of the first transmission resource indicated by the first signaling by receiving the first signaling. After receiving the fourth signaling for indicating to activate the first transmission resource, the first node activates the first transmission resource. After the first node collects the first data set, the first node sends the first data set on the activated first transmission resource.

In some embodiments, the second node may determine whether to allow the first node to continue sending the first data set based on a quality of a sample. For example, in a case where the quality of the sample does not meet the standard, the second node sends a fourth instruction for indicating deactivation to the first node.

In some embodiments, the above-mentioned N samples may include a plurality of samples at different moments or different positions. The first node may package N samples and send the packaged N samples together to the second node.

In some embodiments, the first node encodes N samples into a coding block, and sends the coding block on the first transmission resource determined according to the first signaling. A number of coding blocks obtained by encoding N samples is not limited in the embodiments of the present disclosure. In some embodiments, a coding block is also referred to as a transport block (TB).

In an embodiment, the first node may encode the N samples into a coding block, where the coding block includes K coding block portions, where K is a positive integer greater than 1. Furthermore, the first node may send the coding block obtained by encoding the N samples in a plurality of slots, where a coding block portion of the coding block is sent in a slot. A coding block is divided into K portions, each portion of the coding block corresponds to a coding block portion, or referred to as a partial coding block, sometimes also referred to as a sub-coding block. There may be an overlapping part between two coding block portions, or there may be no overlapping part between the two coding block portions (i.e., respective coding block portions are different from each other).

Exemplarily, numbers of samples corresponding to respective K coding block portions may be same, or numbers of samples corresponding to respective K coding block portions may be different.

Exemplarily, if a transmission capacity of the first node in a slot is insufficient to transmit the N samples, and N samples need to be transmitted in K slots, the K slots may correspond to transmission resources over K periods. At this time, the first node may encode N samples to obtain a coding block, and divide the coding block into K coding block portions, and send the K coding block portions in K slots, respectively. Correspondingly, the second node may receive K coding block portions of the coding block sent from the first node in K slots, respectively, and merge the K coding block portions of the coding block to obtain a complete coding block, thereby obtaining the above-mentioned N samples.

In an embodiment, the first node may encode the N samples into K coding blocks, where K is a positive integer greater than 1. Furthermore, the first node may send the K coding blocks obtained by encoding the N samples in a plurality of slots, and a coding block is sent in a slot.

Exemplarily, numbers of samples corresponding to respective K coding block may be same, or numbers of samples corresponding to respective K coding block may be different.

Exemplarily, if a transmission capacity of the first node in a slot is insufficient to transmit the N samples, and N samples need to be transmitted in K slots, the K slots may correspond to transmission resources over K periods. At this time, the first node may divide the N samples into K portions, and encode each portion of samples, thereby obtaining K coding blocks. The K coding blocks are respectively sent in K slots. Correspondingly, the second node may receive K coding blocks sent from the first node in K slots, respectively, and obtain the above-mentioned N samples by unscrambling K portions of samples corresponding to the K coding blocks.

In some embodiments, in a case where the coding block or a coding block portion in the coding block is sent incorrectly, the first node re-sends the coding block or the coding block portion of a coding block. Exemplarily, a maximum number of re-transmissions for the above-mentioned re-sending is determined according to a capability of the first node.

Exemplarily, the first node sends the coding block to the second node on the first transmission resource indicated by the first signaling. Further, the second node receives the coding block on the first transmission resource indicated by the first signaling, and finds that the received coding block is incorrect through verification. The second node may initiate a new scheduling process or re-transmit a signaling. Correspondingly, after the first node receives the new scheduling process or a re-transmission signaling initiated by the second node, the first node re-transmits the coding block. The second node receives the re-transmitted coding block from the first node. At this time, if the second node finds that the received coding block is successfully transmitted through verification, the first node may not be indicated to re-transmit anymore. Alternatively, if the second node finds that the received coding block is incorrect through verification, the second node may continue to initiate a new scheduling process or a re-transmission signaling. After the first node receives the new scheduling process or the re-transmission signaling initiated by the second node, the first node re-transmits the coding block. The maximum number of re-transmissions of the first node does not exceed A1 (that is, the above-mentioned maximum number of re-transmissions) times, where A1 is related to the capability of the first node. Herein, re-transmitted contents may also be a coding block portion of a coding block.

Exemplarily, the first node sends the coding block to the second node on the first transmission resource indicated by the first signaling. Correspondingly, the second node receives the coding block on the first transmission resource indicated by the first signaling, and finds that at least one coding block portion in the received coding block is incorrect through verification. The second node may initiate a new scheduling process or a re-transmission signaling. Correspondingly, after the first node receives the new scheduling process or the re-transmission signaling initiated by the second node, the first node re-transmits the coding block portion that is transmitted incorrectly. The second node receives the re-transmitted coding block portion from the first node. At this time, if the second node finds that at least one coding block portion in the received coding block is successfully transmitted through verification, the first node may not be indicated to re-transmit anymore. Alternatively, if the second node finds that at least one coding block portion in the received coding block is incorrect through verification, the second node may continue to initiate a new scheduling process or a re-transmission signaling. After the first node receives the new scheduling process or re-transmission signaling initiated by the second node, the first node re-transmits the coding block portion that is transmitted incorrectly. The maximum number of re-transmissions of the first node does not exceed A1 (that is, the above-mentioned maximum number of re-transmissions) times, where A1 is related to the capability of the first node.

In some embodiments, considering that a capacity of transmission resources is limited or the first node does not collect N samples, the above-mentioned operation where first node encodes N samples into a coding block may be replaced by: an operation where the first node encodes M samples among collected samples to obtain a coding block. M is a positive integer less than or equal to N. Exemplarily, the M samples may be samples with the highest quality among the collected samples, or the M samples actually collected, or the M samples with largest or smallest sample indexes among the collected samples, or M samples selected randomly, etc.

In some embodiments, the operation where the first node encodes N samples into a coding block may be implemented as follows: the first node may encode M samples among the N samples based on a first MCS, so as to obtain the coding block. The first MCS is an MCS indicated by the first signaling.

In an embodiment, the first node may encode all samples among the N samples to obtain a coding block. At this time, M is equal to N.

In an embodiment, a capacity of the first transmission resource determined according to the first signaling is smaller than transmission bits corresponding to N samples, and the first node may select M samples from the N samples and encode the M samples into a coding block. At this time, M is a positive integer less than or equal to N. Exemplarily, a method of selecting M samples from N samples includes, but is not limited to one of the following: the M samples may be samples with the highest quality among the N samples, or M samples actually collected, or M samples with largest or smallest sample indexes among the N samples, or M samples selected randomly.

In some embodiments, the above-mentioned first transmission resource includes a first portion and a second portion, and the first node may send the coding block on the first portion of the first transmission resource, and transmit padding information, data or signaling other than the N samples on the second portion of the first transmission resource. As an example, the padding information may be set to 0 or other preset values.

In some embodiments, the first node may determine a sending content on the second portion of the first transmission resource according to a number of bits of the coding block and a number of bits corresponding to the first transmission resource.

Exemplarily, the second node may allocate a transmission resource (i.e., the first transmission resource determined according to the first signaling) to the first node through a dynamic grant manner or a configured grant manner. The transmission resource may be used to transmit the first data set with a capacity of C0 bits, i.e., the transmission resource may effectively transmit C0 bits. If the N samples acquired by the first node have only C1 bits after being encoded, where C1<C0, at this time, since C1 is smaller than C0, a portion of the first transmission resource determined according to the first signaling may be wasted. For example, in CSI prediction (including prediction for channel matrix information, prediction for a feature vector or codebook corresponding to the channel matrix information, time domain beam prediction, etc.), it is necessary to predict CSI in K slots, but actually only CSI less than K slots are predicted. In an embodiment, for example, in CSI prediction (including prediction for channel matrix information, prediction for a feature vector or codebook corresponding to the channel matrix information, time domain beam prediction, etc.), it is originally intended to obtain features in L historical slots, but only features less than L historical moments are collected. This situation results in a number of bits actually to be transmitted being smaller than a number of bits transmitted by the first transmission resource, thereby wasting a portion of the resource.

Furthermore, if C1/CO is less than a threshold A, or C0-C1 is less than a threshold B, a portion of C0-C1 (i.e., the above-mentioned second portion) in the first transmission resource is left vacant or filled with zeros, or used to transmit other uplink data. Herein, the threshold A is a real number greater than 0 and less than 1, and B is a number greater than 0. Both A and B may be preconfigured, or sent from the base station to the terminal, or obtained through a negotiation between the terminal and the base station.

In some embodiments, an operation where the first node encodes N samples into a coding block may be implemented as follows: the first node encodes M samples among the N samples based on a second MCS, so as to obtain the coding block. An index of the second MCS is smaller than an index of a first MCS, and the first MCS is an MCS indicated by the first signaling.

It should be understood that in a case where the capacity of the first transmission resource determined according to the first signaling is greater than transmission bits corresponding to N samples, the second MCS with an index smaller than that of the first MCS may be determined for encoding, thus to avoid wasting the above-mentioned first transmission resource, thereby obtaining more modulation symbols to fully occupy the first transmission resource.

Exemplarily, if the capacity of the first transmission resource determined according to the first signaling configured by the first node is C0 bits, and the N samples acquired by the first node have only C1 bits after being encoded, where C1<C0, at this time, since C1 is smaller than C0, a portion of the first transmission resources determined according to the first signaling may be wasted. The first node may reduce an MCS (such as the above-mentioned second MCS) for transmitting the first data set, or perform channel coding in a manner of making C1 as close to C0 as possible by repeated coding, so as to make full use of the first transmission resource. The first node may further feed back an actually used MCS to the second node, or feed back a number of repetitions during encoding.

In some embodiments, the second MCS is determined according to one of: the first node, or a received fifth signaling. The fifth signaling may be a high-layer and/or physical layer signaling. The fifth signaling may come from the second node.

Exemplarily, the first node may determine the second MCS with a size of a capacity closest to the capacity of the first transmission resource according to the capacity of the first transmission resource and transmission bits corresponding to the N samples.

In some embodiments, the first node may further acquire channel quality information, and send the first request information according to the channel quality information. The first request information is used to request to stop transmitting the first data set or data on the first transmission resource. Exemplarily, the first node may send the first request information in a case where a channel quality indicated by the channel quality information is less than or equal to a channel quality threshold. After the second node receives the first request information, the second node sends a fourth signaling to deactivate the first transmission resource in a case where the first request information takes a first value. In a case where the first request information takes a second value, the fourth signaling is not sent, and the first transmission resource may continue to be used to transmit a data set. Herein, the first value and the second value are integer values or Boolean values, and the first value and the second value are different.

In some embodiments, the first node may also send the first request information according to a position of the first node itself in the cell. For example, the first node is at an edge of a cell, and sends the first request information.

Exemplarily, the first node may further determine whether the first node is at the edge of the cell based on any one of measured CQI, SINR, RSRP, position related information, angle related information, and transmission time related information.

It should be noted that, in a case where the first node is at the edge of the cell or the channel quality is relatively poor, it is not possible to send the first data set to the second node well. Therefore, the first request information is sent to request to stop transmitting data on the above-mentioned first transmission resource. Upon the first transmission resource is a first transmission resource configured in a configured grant manner, an operation where the first node sending the first request information may be equivalent to exiting configured grant transmission.

In some embodiments, after the second node receives the first request information, the second node may further send first response information to the first node. Exemplarily, the first response information takes a first value, which indicates that stopping transmitting the first data set on the first transmission resource is agreed. The first response information takes a second value, which indicates that stopping transmitting the first data set on the first transmission resource is refused.

Correspondingly, in a case where the first node receives the first response information, the first node may determine whether to send the first data set on the first transmission resource according to the first response information. In a case where the first response information takes the first value, the first node stops sending the first data set on the first transmission resource; or in a case where the first response information takes a second value, the first node continues to send the first data set on the first transmission resource.

In some embodiments, the first node acquires a time threshold, and determines whether to clear the first data set stored locally according to the time threshold and time for transmitting a data set. In the case where a transmission time for the first data set is less than the time threshold, the first node does not clear the data set, and continues to try to send the first data set until sending time (or the corresponding slot) is greater than the time threshold; or in a case where the transmission time for the first data set is greater than or equal to the time threshold, the first node clears the first data set, that is, stops sending the first data set on the first transmission resource.

Exemplarily, the above-mentioned duration threshold is determined according to one of:
a received third signaling, where the third signaling may also be a high-layer and/or physical layer signaling, and the third signaling may come from the second node;
timeliness of the first data set;
a cache size of the first node.

In an embodiment, the time threshold is a positive value, whose unit may be slot, symbol, or sub slot, second, millisecond, microsecond, or the like.

Exemplarily, if the first node obtains the first data set including N samples, but upon sending the first data set to the second node on the first transmission resource, the first data set may not upload the first data set due to one or more of the following reasons: the first transmission resource conflicts with other transmission resources; a remaining transmission capacity of the first transmission resource cannot completely transmit the first data set corresponding to the N samples; some samples in the collected first data set do not meet requirements (e.g., do not meet SINR requirements, accuracy being insufficient, etc.). In a case where the second node does not receive the first data set reported from the first node, within time T (i.e., the above-mentioned duration threshold), the second node may continue to allocate the first transmission resource to the first node, so that the first node continues to transmit the first data set. However, in a case where the first node continues to send the first data set for a duration greater than or equal to the time T, the second node deactivates the first transmission resource. The first node may discard (e.g., operations such as clearing cache, etc.) the collected first data set, so as to collect a new first data set next time.

In some embodiments, the first node may further acquire description information of the N samples and send the description information of the N samples.

Exemplarily, description information of a sample includes at least one of: received reference signal quality related information, a confidence, a motion speed of the first node, location information of the first node, transmission time related information, angle related information, sample quantization accuracy, a sample normalization type, a sample numerical value range, a sample array dimension, or a sample array arrangement type.

In some embodiments, a sample corresponds to a piece of sample description information. In some embodiments, a plurality of samples correspond to a piece of sample description information. That is, a piece of sample description information is used to describe a group of samples. In some embodiments, the sample description information may include the following explanations or contents:
received reference signal quality related information, exemplarily, the reference signal quality related information may include SINR, CQI, SNR, RSRP, RSRQ and other information;
confidence: referring to confidence of the N samples, and a value range of the confidence may be 0 to 1;
a motion speed of the first node: may be used to characterize a time domain correlation of a sample, etc.;
location information of the first node: characterizes a quality of a collected sample, for example, if the sample is far from the second node, the quality may be determined to be poor, otherwise the quality may be determined to be good, since signal transmission is more likely to be interfered with longer distances;
transmission time related information: used to characterize a distance between the first node and the second node;
angle related information: may include, but is not limited to AOA, AOD, ZOD and ZOA, etc.;
sample quantization accuracy: used to characterize a number of bits of each value of a quantized sample;
sample normalization type: includes whether normalization is performed, a normalization range (such as (-1, 1), (0, 1), etc.), normalization based on a maximum value, or normalization based on the variance, etc.;
sample numerical value range: used to characterize an actual value range of a sample that is not normalized;
sample array dimension: for example, the sample is an n-dimensional array, and a range of various dimensions of the sample;
sample array arrangement type: for example, row-first arrangement type, column-first arrangement type, etc.

In some embodiments, the first node may send the sample description information on a first transmission resource determined according to the first signaling, or send the sample description information on a second transmission resource determined according to a second signaling. The second signaling may be a high-layer and/or physical layer signaling. In some embodiments, the description information is divided into first description information and second description information. The first description information includes at least one of a sample quantization accuracy, a sample normalization type, a sample numerical value range, a sample array dimension, and a sample array arrangement type. The first description information may be sent once every L0 times the first data set is sent, where L0 is an integer greater than 1. The second description information includes at least one of received reference signal quality related information, a confidence, a motion speed of the first node, location information of the first node, transmission time related information, and angle related information. The second description information may be transmitted once each time the first data set is transmitted. That is, a transmission frequency of the first description information is less than a transmission frequency of the second description information.

In some embodiments, for a sample, it may be determined whether the sample is a high-quality sample or a low-quality sample based on the second description information of the sample. In this way, in an actual process of training the model, high-quality samples may be selected from the plurality of samples to train the model.

In some embodiments, the second node receives the second description information of N samples, and may determine whether various samples are a high-quality samples or low-quality samples based on the second description information of the various samples.

In some embodiments, the first node may determine whether the various samples are high-quality samples or low-quality samples based on the description information of the various samples, and send a determination result to the second node.

Exemplarily, a description information threshold may be set, and a quality of a sample may be determined based on description information of the sample and the sample description information threshold.

For example, the description information threshold may include a first threshold for judging received reference signal quality related information (e.g., SINR, CQI or RSRP), a second threshold for judging confidence, a third threshold for judging a motion speed of the first node, a fourth threshold for judging sample quantization accuracy, etc., which are not listed herein. The first threshold, the second threshold, the third threshold, the fourth threshold, etc., are all positive values, and may be determined by the first node according to an implementation scenario, or may be sent from the second node to the first node through a signaling. If received reference signal quality related information of a sample is greater than the first threshold, the sample is determined as a high-quality sample; otherwise, the sample is determined as a low-quality sample. Alternatively, if confidence of the sample is greater than the second threshold, the sample is determined as a high-quality sample; otherwise, the sample is determined as a low-quality sample. Alternatively, if the motion speed of the first node is less than the third threshold, the sample is determined as a high-quality sample; otherwise, the sample is determined as a low-quality sample. Alternatively, if the sample quantization accuracy is greater than the fourth threshold, the sample is determined as a high-quality sample; otherwise, the sample is determined as a low-quality sample.

In some embodiments, whether the first node is located at a center of a cell or an edge of the cell may further be determined based on one or more of location information of the first node, transmission time related information, and angle related information. If the first node is located at the center of the cell, a corresponding sample is determined as a high-quality sample; or if the first node is located at the edge of the cell, the corresponding sample is determined as a low-quality sample.

Based on the above-mentioned embodiments, on the one hand, the method may optimize a transmission process of a sample from many aspects such as channel quality, a capability of the first node, and transmission resource configuration, so as to improve training accuracy of the encoder trained based on the sample. On another hand, the method may collect higher-quality samples to train the model and improve the performance of the model based on the judgment for sample quality information such as the received reference signal quality related information, the confidence, the motion speed, the location information, transmission time related information, angle related information, and quantization accuracy.

A data set receiving method is further provided in the present disclosure, the method is applied to a second node, as shown in FIG. 3, the method includes S201-S202.

In S201, the second node sends a first signaling.

The first signaling may be a high-layer and/or physical layer signaling. The first signaling is used to configure a first transmission resource.

In some embodiments, the second node may allocate the first transmission resource for the first node based on a dynamic grant manner, a manner of first-type configured grant, or second-type configured grant, and receive a first data set on the first transmission resource.

In some embodiments, the second node dynamically allocates or schedules a resource for the first node through a physical layer signaling, i.e., the first signaling is a physical layer signaling, the second node directly sends the first signaling, or the second node first receives resource scheduling request information, and the resource scheduling request information is used to request the first transmission resource. After the second node receives the resource scheduling request, the second node sends the first signaling to the first node, thereby allocating the first transmission resource for the first node.

In some embodiments, the second node allocates or schedules resources for the first node through a high-layer and physical layer signaling, i.e., the second-type configured grant scheduling manner where a time-frequency resource of a transmission resource, a transmission period, a number of HARQ processes, and an MCS corresponding to the transmission resource is configured through a high-layer signaling first. The second node may further send a fourth signaling. The fourth signaling is used to activate or deactivate the first transmission resource.

In S202, the second node receives a first data set on a first transmission resource determined according to the first signaling, where the first data set includes N samples. N is a positive integer.

In some embodiments, a value of N is determined based on at least one of: a capability of the first node, a cache size, computing power, accuracy of a sample, sample quantization accuracy, an MCS for transmission, a reference signal transmission period, a transmission period of the first transmission resource, or a network side signaling, where meanings and values of the various parameters refer to relevant part of S102, which will not be repeated herein.

In some embodiments, the second node may receive a coding block obtained by encoding the N samples on the first transmission resource determined according to the first signaling.

In an embodiment, the coding block is a coding block obtained by the first node to encode the N samples, and the coding block includes K coding block portions, where K is a positive integer greater than 1. Furthermore, the second node may receive the coding block obtained by encoding the N samples in a plurality of slots, and a coding block portion of the coding block is received in a slot. The second node obtains the N samples by merging the K coding block portions and decoding the merged K coding block portions.

In an embodiment, the coding block received by the second node is K coding blocks (the first node encodes the N samples into K coding blocks), where K is a positive integer greater than 1. Furthermore, the second node may receive the K coding blocks obtained by encoding the N samples in the plurality of slots, and a coding block is received in a slot. The second node obtains the N samples by merging the K coding blocks and decoding the merged K coding block portions.

In some embodiments, in a case where the coding block or a coding block portion in the coding block is sent incorrectly, the second node re-receives the coding block or a coding block portion of the coding block.

In some embodiments, the coding block received by the second node is a coding block obtained by encoding M samples out of N samples based on a first MCS.

In some embodiments, the coding block received by the second node is a coding block obtained by encoding M samples out of N samples based on a second MCS. An index of the second MCS is smaller than an index of the first MCS, the first MCS is an MCS indicated by the first signaling, and M is a positive integer less than or equal to N.

In some embodiments, the second node receives first request information. Exemplarily, the first node may send the first request information in a case where a channel quality indicated by the channel quality information is less than or equal to a channel quality threshold. The first node may determine whether it is necessary to deactivate the first transmission resource according to the received first request information, and send first response information to the first node. As an example, the first response information takes a first value, which indicates that stopping transmitting the first data set on the first transmission resource is agreed. The first response information takes a second value, which indicates that stopping transmitting the first data set on the first transmission resource is refused. The first value and the second value are integers or Boolean values, and the first value and the second value are two different values.

In some embodiments, in a case where the first data set is not successfully transmitted, the second node continues to receive the first data set. As an example, transmission time for the first data set is less than a time threshold, the second node continues to schedule the first node to send the first data set, thereby receiving the first data set sent from the first node.

In some embodiments, the second node sends a third signaling to the first node, where the third signaling is a high-layer signaling and/or a physical layer signaling, and the third signaling carries the duration threshold.

In some embodiments, the second node may further receive description information of the N samples. Exemplarily, description information of a sample includes at least one of: received reference signal quality related information, a confidence, a motion speed of the first node, location information of the first node, transmission time related information, angle related information, sample quantization accuracy, a sample normalization type, a sample numerical value range, a sample array dimension, or a sample array arrangement type.

In an embodiment, the second node constructs a larger total data set (referred to as data set) by receiving multiple first data sets from one or more first nodes at different moments and/or different positions for multiple times. The data set may be added, deleted, or updated with some samples as needed. The data set is retained locally, or the data set is transmitted to a third-party server for storing the data set. In a case where the second node needs to train a model located at the second node, one or more samples are selected from the data set to train the model. In a case where the first node needs to train a model located at the first node, the base station may transmit one or more samples in the data set to the terminal through a transmission resource.

In some embodiments, the second node may screen samples in the data set according to description information of received samples, and selects samples with better quality. In an embodiment, sample description information received by the base station is received reference signal quality related information, or the base station obtains the received reference signal quality related information (e.g., SINR, CQI or RSRP) of the sample directly or indirectly. In a case where the received reference signal quality related information of a sample is less than a first threshold, it is considered that a quality of the sample is relatively low; otherwise, the quality of the sample is relatively high. In an embodiment, the sample description information received by the base station is confidence of a sample, or the base station obtains the confidence of the sample directly or indirectly. In a case where the confidence of the sample is less than a second threshold, it is considered that a quality of the sample is relatively low; otherwise, the quality of the sample is relatively high. In an embodiment, the sample description information received by the base station is sample quantization accuracy, or the base station obtains the sample quantization accuracy directly or indirectly. In a case where the sample quantization accuracy is less than a fourth threshold, it is considered that a quality of the sample is relatively low; otherwise, the quality of the sample is relatively high. Similarly, a quality of a sample may be similarly determined to be high or low based on other description information of the sample, thereby deciding whether to retain the sample. In an embodiment, the base station may delete samples with a low quality in the data set, and retains samples with a high quality in the data set. In an embodiment, the base station may divide the data set into a plurality of sub data sets with different quality levels, for example, a quality of a sub data set with a first level is higher than that of a sub data set with a second level, a quality of the sub data set with the second level is higher than that of a sub data set with a third level, and so on. And according to the different types of terminals, sub data sets with different levels are transmitted. In an embodiment, the terminal has high requirements for data transmission rate or positioning accuracy, and needs a high-quality data set to train a model. Thus, the base station sends all or a portion of the samples of a sub data set with the highest or higher quality level to the terminal. Otherwise, all or a portion of the samples in a sub data set with an average quality level may be sent to the terminal. In an embodiment, the terminal is a subscriber or a member user, and needs a high-quality data set to train a model. Then the base station sends all or a portion of the samples of a sub data set with the highest or higher quality level to the terminal. Otherwise, all or a portion of the samples in a sub data set with an average quality level may be sent to the terminal. In an embodiment, the terminal supports a high-complexity model, and needs a high-quality data set to train a model. Then the base station sends all or a portion of the samples of a sub data set with the highest or higher quality level to the terminal. Otherwise, all or a portion of the samples in a sub data set with an average quality level may be sent to the terminal. Samples in a sub data set in which quality level are sent may be determined according to an implementation of the base station.

In some embodiments, the second node may also receive a reference signal (such as an SRS) sent from the first node, and generate a sample corresponding to a related model based on the SRS. One or more of the samples are composed of a data set. In an embodiment, the terminal sends a codebook-based (e.g., a codebook in LTE or NR) pre-code, and N is a positive integer greater than 1. The codebook in NR includes type I codebook, type II codebook, type II port selection codebook, enhanced type II codebook, enhanced type II selection codebook, and further enhanced type II selection codebook. The codebook here includes L codewords. In some embodiments, a codeword is a vector. In some embodiments, the codeword is a matrix, the matrix includes r columns, each column is also a vector. The base station receives a pre-code fed back by the terminal, but finds that the accuracy is not enough, so the base station enhances precoding information through a model similar to super-resolution to implement a more accurate precoding matrix. In some embodiments, in order to obtain a pre-code with higher accuracy, the base station may receive an uplink SRS, generate uplink channel information (i.e., one or more samples) based on the SRS, and input the uplink channel information and a received precoding matrix into a model, thereby outputting a precoding matrix with higher accuracy.

In addition, a detailed description for S201-S202 may refer to the description for S101-S102, which will not be repeated herein.

Another data set receiving method is further provided in the embodiments of the present disclosure, the method is applied to a first node. As shown in FIG. 4, the data set receiving method includes S301-S302.

In S301, the first node receives a sixth signaling.

The sixth signaling may also be a high-layer and/or physical layer signaling. The sixth signaling may come from a second node, and is used to indicate a third transmission resource configured for the first node.

In S302, the first node receives a second data set on a third transmission resource determined according to the sixth signaling, where the second data set includes R samples, R is a positive integer.

In some embodiments, the first node trains a model in the first node with the received second data set, and the model includes but is not limited to one of the following: an encoder for generating CSI using AI, a model for positioning based on AI, an AI-based spatial and/or time domain beam prediction model, an AI-based channel estimation model, or the like.

A detailed description for a sample may refer to the description of the sample in S101 above, which will not be repeated herein.

In some embodiments, the first node receives the second data set, and may train the model based on the second data set.

In some embodiments, the second data set received by the first node is a portion of samples in a total data set formed by one or more first data sets previously fed back by the first node to the second node. In some embodiments, the second data set received by the first node is a portion of samples in a total data set formed by one or more first data sets previously fed back by other first nodes to the second node. In some embodiments, the second data set received by the first node is a portion of samples (e.g., samples obtained by the second node by measuring an uplink reference signal) in a data set (e.g., a data set downloaded from other third-party servers) obtained by the second node directly or indirectly.

In the present disclosure, the first data set and the second data set are both sets of samples. The "first" and "second" here are just names for distinguishing the sample sets. The sample sets may be selected from all or a portion of samples of a large data set, or samples used to consist all or a portion of the samples of a large data set, but "first" and "second" are not used to indicate an order or a size relationship.

In some embodiments, the second node sends the second data set in three manners. A first manner (cell-specific) is broadcasting the second data set to all first nodes in a service area. All first nodes within the service area of the second node may receive the second data set on a transmission resource for broadcasting the second data set when needed. The second manner (specific to a user group) is broadcasting the second data set to a group of first nodes within a service area. The group of first nodes within the service area of the second node receives the second data set on the transmission resource for sending the second data set. The third manner (user-specific) is sending the second data set to a specific first node within a service area. The specific first node within the service area of the second node receives the second data set on the transmission resource for transmitting the second data set.

In some embodiments, in order to save overhead of transmission resources, the second node may first broadcast a data set including a plurality of samples to all first nodes in the service area in a cell-specific manner, and a broadcasting operation may be performed once or multiple times. All first nodes within the service area of the second node may receive the broadcasted data set once or multiple times when needed, and train these first nodes' own models. If a first node finds that the performance of the trained model has not yet met requirements, the second node may be continued to be requested to send a data set including the plurality of samples in a user-specific manner. The first node receives the data set including the plurality of samples sent from the second node in the user-specific manner for training the model until the performance meets the requirements. If the performance requirements are not met, the request and a reception process may be further repeated to obtain the data set.

In some embodiments, the first node may further acquire description information of the second data set. The descriptive information of the second data set includes at least one of: an identifier of the second data set, function description information (e.g., used for positioning, for estimating channels, for CSI generation, for CSI prediction, for spatial and/or time domain prediction of a beam, for scheduling, etc.), capability information of the first node corresponding to the second data set, and a transmission type (e.g., cell-specific, user group-specific, user-specific).

In some embodiments, the description information of the second data set includes a transmission type, and the transmission type is user-specific.

In some embodiments, the description information of the second data set includes a transmission type, and the transmission type is cell-specific. Before the first node receives the user-specific data set, the first node further receives a data set (cell-specific data set) including a plurality of samples sent from the second node via broadcast.

In an embodiment, the first node may receive the description information of the second data set on the third transmission resource determined according to the sixth signaling or on a fourth transmission resource determined according to a seventh signaling. The seventh signaling may also be a high-layer and/or physical layer signaling, and the seventh signaling may come from the second node, and may be used to indicate a transmission resource for transmitting the description information of the second data set.

In some embodiments, the first node may further acquire performance information, and send second request information according to the performance information. The second request information is used to request a new data set.

In an embodiment, after the first node trains a model based on the second data set, the first node may determine whether the model training is complete based on the performance information. If the training is completed, the first node sends request information for requesting to stop receiving the data set. Alternatively, if the training is not completed, the first node sends the second request information for requesting a new data set to train the model again based on the new data set.

In some embodiments, after training the model based on the new data set, the first node may also determine whether the model training is complete based on the performance information. If the training is completed, the first node sends request information for requesting to stop sending the data set. Otherwise, the first node sends the second request information to request a new data set again until the model training is completed.

In an embodiment, the first node may be a terminal, the second node may be a base station, and the terminal may receive the sixth signaling, and receive the second data set on the third transmission resource determined according to the sixth signaling. The terminal may train an encoder in the terminal based on the second data set, and after the encoder is trained based on the second data set, determine whether the training for the encoder is completed. If the training is completed, the terminal requests the base station to stop sending the data set. Alternatively, if the training is not completed, the terminal requests a new data set from the base station to train the encoder again based on the new data set until the encoder on the terminal side is trained completely. Herein, the encoder is a model located at the first node in AI-based CSI generation. If the terminal includes two models, which are an encoder and a decoder, the data set is also used to train the decoder on the terminal side.

In another possible example, the terminal sends a data set through a first transmission resource, the base station receives the data set, and trains a model (e.g., a decoder, where the decoder is a model located at the second node in AI-based CSI recovery) located at the base station side, and after the decoder is trained based on the data set, the base station determines whether the decoder training is completed. If the training is completed, the base station requests the terminal to stop sending the data set. Alternatively, if the training is not completed, the base station requests a new data set from the terminal to train the decoder again based on the new data set until the decoder on the base station side is trained completely. If the base station includes two models, which are an encoder and a decoder, the data set is also used to train the decoder on the base station side.

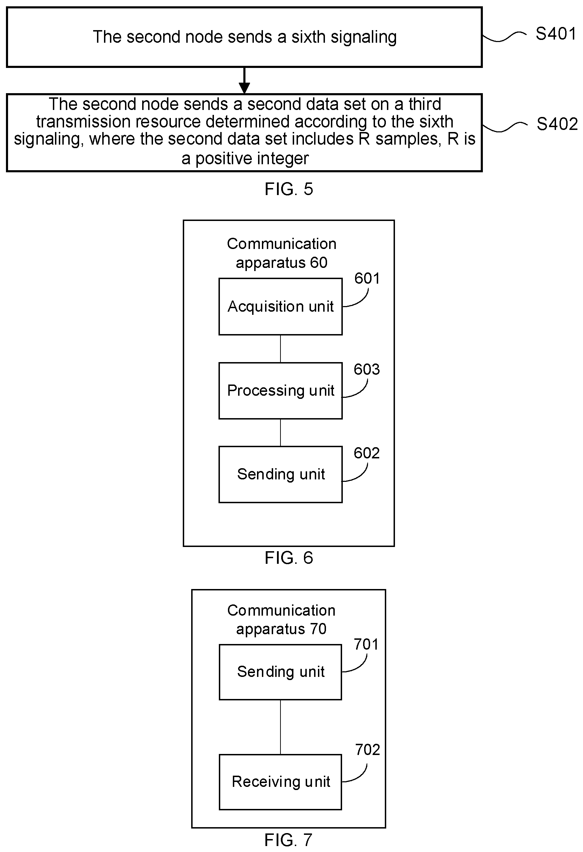

Another data set sending method is further provided in the embodiments of the present disclosure, the method is applied to a second node. Correspondingly to the data set receiving method shown in FIG. 4, as shown in FIG. 5, the method includes S401-S402.

In S401, the second node sends a sixth signaling.

In S402, the second node sends a second data set on a third transmission resource determined according to the sixth signaling, where the second data set includes R samples, R is a positive integer.

In some embodiments, the second node may further send description information of the second data set, and the description information of the second data set includes at least one of: an identifier of the second data set, function description information, capability information of the first node corresponding to the second data set, and a transmission type.

In some embodiments, the description information of the second data set includes a transmission type, and the transmission type is user-specific.

In some embodiments, the second node may further the send description information of the second data set on the third transmission resource determined according to the sixth signaling or on a fourth transmission resource determined according to a seventh signaling.

In some embodiments, the second node may further receive second request information; the second request information is used to request a new data set or stop sending the data set.

In addition, a detailed description for S401-S402 may refer to the description for S301-S302, which will not be repeated herein.

The foregoing contents mainly introduce the solutions provided in the present disclosure from the perspective of interaction between various nodes. It can be understood that, in order to implement the above-mentioned functions, the various nodes, such as the second node and the first node, include corresponding hardware structures and/or software modules for performing the various functions. Those skilled in the art should easily realize that the various functions of the present disclosure may be implemented in the form of hardware or a combination of hardware and computer software in combination with algorithms and steps described in the embodiments disclosed in the present disclosure. Whether a certain function is implemented by hardware or by computer software driving hardware depends on the specific application and design constraint conditions of the technical solutions. Professional technicians may use different methods to implement the described functions for each specific application, but such implementation should not be considered beyond the scope of the present disclosure.

FIG. 6 is a schematic diagram of composition of a communication apparatus provided in the embodiments of the present disclosure. As shown in FIG. 6, the communication apparatus 60 includes an acquisition unit 601, a sending unit 602, and a processing unit 603. The communication apparatus 60 may be the first node or a chip in the first node. When the communication apparatus 60 is configured to implement the functions of the first node in the above-mentioned embodiments, various units are configured to implement the following functions.

The acquisition unit 601 is configured to acquire a first data set and a first signaling, where the first data set includes N samples, N is a positive integer.

The sending unit 602 is configured to send the data set on a first transmission resource determined according to the first signaling.

In some embodiments, the acquisition unit 601 is further configured to acquire description information of the N samples. The sending unit 602 is further configured to send description information of N samples.

In some embodiments, description information of a sample includes at least one of: received reference signal quality related information, a confidence, a motion speed of the first node, location information of the first node, transmission time related information, angle related information, sample quantization accuracy, a sample normalization type, a sample numerical value range, a sample array dimension, or a sample array arrangement type.

In some embodiments, the sending unit 602 is configured to send description information of a sample on the first transmission resource determined according to the first signaling, or to send the description information of the sample on a second transmission resource determined according to a second signaling.

In some embodiments, a value of N is determined based on at least one of: a capability of the first node, a cache size, computing power, sample quantization accuracy, a modulation and coding scheme (MCS), a reference signal transmission period, a transmission period of the first transmission resource, or a network side signaling.

In some embodiments, the acquisition unit 601 is further configured to acquire channel quality information. The sending unit 602 is further configured to send first request information according to the channel quality information.

In some embodiments, after sending the first request information, the acquisition unit 601 is further configured to receive first response information; and determine, according to the first response information, to stop sending the first data set or to continue sending the first data set on the first transmission resource.

In some embodiments, the acquisition unit 601 is further configured to acquire a time threshold. The processing unit 603 is configured to determine whether to clear the first data set according to the time threshold and time for transmitting the data set.

In some embodiments, the time threshold is determined according to one of: a received third signaling, timeliness of the data set, or a cache size.

In some embodiments, the first signaling is a second-type configured grant signaling, and the acquisition unit 601 is further configured to receive a third signaling, where the third signaling is used to carry time threshold information.

In some embodiments, the first signaling is a high-layer signaling and a physical layer signaling, that is, the first signaling schedules or allocates the first transmission resource through a second-type configured grant manner. The acquisition unit 601 is further configured to receive a fourth signaling, where the fourth signaling is used to activate or deactivate a transmission resource.

In some embodiments, the first signaling is a physical layer signaling, that is, the first signaling schedules or allocates the first transmission resource through a dynamic grant manner. Before sending the first data set, the sending unit 602 is further configured to send resource scheduling request information, where the resource scheduling request information is used to request a first transmission resource.

In some embodiments, the processing unit 603 is further configured to encode the N samples into a coding block. The sending unit 602 is configured to send the coding block on the first transmission resource determined according to the first signaling.

In some embodiments, the N samples are encoded into a coding block, and the coding block includes K coding block portions. The sending unit 602 is configured to send the K coding block portions of the coding block in K slots, where K is a positive integer greater than 1.

In some embodiments, the N samples are encoded into K coding blocks. The sending unit 602 is configured to send the K coding blocks in K slots, where K is a positive integer greater than 1.

In some embodiments, the processing unit 603 is configured to: encode M samples among the N samples in the first data set into the above-mentioned coding block based on a first MCS. The first MCS is an MCS indicated by the first signaling, and M is a positive integer less than or equal to N.

In some embodiments, the transmission resource includes a first portion and a second portion, and the sending unit 602 is configured to send the coding block on the first portion of the first transmission resource, and transmit padding information, data or signaling other than the N samples on the second portion of the first transmission resource.

In some embodiments, a sending content on the second portion of the first transmission resource is determined according to a number of bits of the coding block and a number of bits corresponding to the first transmission resource.

In some embodiments, the processing unit 603 is configured to: encode M samples among the N samples into the above-mentioned coding block based on a second MCS, where M is a positive integer less than or equal to N. An index of the second MCS is smaller than an index of a first MCS, and the first MCS is an MCS indicated by the first signaling.

In some embodiments, the second MCS is determined according to one of: the first node, or a received fifth signaling.

In some embodiments, the sending unit 602 is further configured to re-transmit a coding block or a coding block portion in response to that the coding block or a portion in the coding block is sent incorrectly.

In some embodiments, a maximum number of re-transmissions is determined according to a capability of the first node.

In some embodiments, the acquisition unit 601 is further configured to receive a sixth signaling, and receive a second data set on a third transmission resource determined according to the sixth signaling, where the second data set includes R samples, R is a positive integer.

In some embodiments, the acquisition unit 601 is further configured to acquire description information of the second data set, and the description information of the second data set includes at least one of: an identifier of the second data set, function description information, capability information of the first node, or a transmission type.

In some embodiments, the acquisition unit 601 is further configured to receive the description information of the second data set on the third transmission resource determined according to the sixth signaling or on a fourth transmission resource determined according to a seventh signaling.

In some embodiments, the acquisition unit 601 is further configured to acquire performance information. The sending unit 602 is further configured to send second request information according to the acquired performance information; the second request information is used to request a new second data set.

In some embodiments, the acquisition unit 601 is further used to receive the second data set on the third transmission resource in a broadcasting manner, receive the second data set on the third transmission resource in a user-specific manner, or receive the second data set on the third transmission resource in a user group-specific manner.

FIG. 7 is a schematic diagram of composition of another communication apparatus according to some embodiments. As shown in FIG. 7, the communication apparatus 70 includes a sending unit 701 and a receiving unit 702. The communication apparatus 70 may be the above-mentioned second node or a chip in the second node. When the communication apparatus 70 is configured to implement the functions of the second node in the above-mentioned embodiments, various units are configured to implement the following functions.

The sending unit 701 is configured to send a first signaling.

The receiving unit 702 is configured to receive a first data set on a first transmission resource determined according to the first signaling, where the first data set includes N samples, N is a positive integer.

In some embodiments, the receiving unit 702 is further configured to receive description information of the N samples.

In some embodiments, description information of a sample includes at least one of: received reference signal quality related information, a confidence, a motion speed of a first node, location information of the first node, transmission time related information, angle related information, sample quantization accuracy, a sample normalization type, a sample numerical value range, a sample array dimension, or a sample array arrangement type.

In some embodiments, the receiving unit 702 is configured to receive description information of a sample on the first transmission resource determined according to a first signaling, or to receive the description information of the sample on a second transmission resource determined according to a second signaling.

In some embodiments, a value of N is determined based on at least one of: a capability of a terminal, a cache size, computing power, sample quantization accuracy, a modulation and coding scheme (MCS) for transmission, a reference signal transmission period, a transmission period of the first transmission resource, or a network side signaling.

In some embodiments, the receiving unit 702 is further configured to receive first request information sent according to channel quality information.

In some embodiments, after receiving the first request information, the sending unit 701 is further configured to send first response information; the first response information is used to indicate the first node to stop sending the first data set or to continue sending the first data set on the first transmission resource.

In some embodiments, the sending unit 701 is further configured to send a second signaling, where the second signaling is used to indicate a second transmission resource.

In some embodiments, the sending unit 701 is further configured to send a third signaling. The third signaling is used to indicate a time threshold.

In some embodiments, the first signaling is a high-layer signaling and a physical layer signaling, that is, the first signaling schedules or allocates the first transmission resource through a second-type configured grant manner. The sending unit 701 is further configured to send a fourth signaling; the fourth signaling is configured to activate or deactivate the first transmission resource.

In some embodiments, the first signaling is a physical layer signaling, that is, the first signaling schedules or allocates the first transmission resource through a dynamic grant manner. Before receiving the first data set, the receiving unit 702 is further configured to receive resource scheduling request information, where the resource scheduling request information is used to request the first signaling.

In some embodiments, the receiving unit 702 is configured to: receive a coding block obtained by encoding the N samples on the first transmission resource determined according to the first signaling.

In some embodiments, the N samples are encoded into a coding block, the coding block includes K coding block portions, and the K coding block portions of the coding block are received in K slots, where K is a positive integer greater than 1.

In some embodiments, the N samples are encoded into K coding blocks, and the K coding blocks are received in K slots, where K is a positive integer greater than 1.

In some embodiments, the coding block is a coding block obtained by encoding M samples among the N samples based on a first MCS. The first MCS is an MCS indicated by the first signaling, and M is a positive integer less than or equal to N.

In some embodiments, the first transmission resource includes a first portion and a second portion, and the receiving unit 702 is further configured to: receive the coding block on the first portion of the first transmission resource, and receive padding information, data or signaling other than the N samples on the second portion of the first transmission resource.

In some embodiments, receiving contents of the second portion of the first transmission resource are determined according to a number of bits of the coding block and a number of bits corresponding to the first transmission resource.

In some embodiments, the coding block is a coding block obtained by encoding M samples among the N samples based on a second MCS. M is a positive integer, an index of the second MCS is smaller than an index of a first MCS, and the first MCS is an MCS indicated by the first signaling.

In some embodiments, a fifth signaling is sent, and the fifth signaling is used to determine the second MCS.

In some embodiments, the receiving unit 702 is further configured to re-receive a coding block or a coding block portion in response to that the coding block or a portion in the coding block is sent incorrectly.

In some embodiments, a maximum number of re-receptions is determined according to a capability of the first node.

In some embodiments, the sending unit 701 is further configured to send a sixth signaling; send a second data set on a third transmission resource determined according to the sixth signaling, where the second data set includes R samples, R is a positive integer.

In some embodiments, the sending unit 701 is further configured to send description information of the second data set, and the description information of the second data set includes at least one of: an identifier of the second data set, function description information, capability information of the first node corresponding to the second data set, and a transmission type.

In some embodiments, the sending unit 701 is configured to send the description information of the second data set on the third transmission resource determined according to the sixth signaling or a fourth transmission resource determined according to the seventh signaling.

In some embodiments, the receiving unit 702 is further configured to receive second request information, where the second request information is used to request a new second data set.

In some embodiments, the sending unit 701 is further used to send the second data set on the third transmission resource in a broadcasting manner, send the second data set on the third transmission resource in a user-specific manner, or send the second data set on the third transmission resource in a user group-specific manner.

It should be noted that the units in FIG. 6 and FIG. 7 may also be referred to as modules. For example, the sending unit may be referred to as a sending module. In addition, in the embodiments shown in FIG. 6 and FIG. 7, the names of the various units may not be the names shown in the figures. For example, the sending unit may also be referred to as a communication unit, and the receiving unit may also be referred to as a communication unit.

If the various units in FIG. 6 and FIG. 7 are implemented in the form of the software functional unit and sold or used as independent products, they may be stored in a computer-readable storage medium. Based on this understanding, the technical solutions of the present disclosure may be essentially, or a part of the technical solutions of the present disclosure that contributes to some technologies, or all or a portion of the technical solutions of the present disclosure may be, embodied in the form of a software product, and the computer software product may be stored in a storage medium including couples of instructions to enable a computer device (may be a personal computer, a server, a network device, etc.) or a processor to perform all or a portion of steps of the method in the various embodiments of the present disclosure. The storage medium for storing a computer software product includes various types of medium capable of storing program codes, such as a USB flash drive, a mobile disk, a Read-Only Memory (ROM), a Random-Access Memory (RAM), a magnetic disk, or an optical disk.

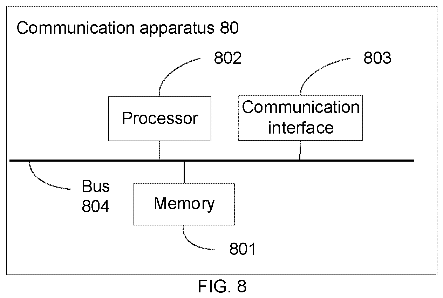

In a case of implementing the functions of the above-mentioned integrated modules in the form of hardware, a structural schematic diagram of a communication apparatus is provided in the embodiments of the present disclosure, and the communication apparatus may be the above-mentioned communication apparatus 60 or communication apparatus 70. As shown in FIG. 8, the communication apparatus 80 includes a memory 801, a processor 802, a communication interface 803, and a bus 804.

The memory 801 may be a read-only memory (ROM) or other types of static storage devices that can store static information and instructions, a random access memory (RAM), or other types of dynamic storage devices that can store information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

The processor 802 may implement or perform various exemplary logical blocks, modules and circuits described in combination with the present disclosure. The processor 802 may be a central processor, a general-purpose processor, a digital signal processor, an application specific integrated circuit, a field programmable gate array, or other programmable logic component, a transistor logic component, a hardware assembly, or any combination thereof. The processor 802 may implement or execute various illustrative logical blocks, modules and circuits described in conjunction with the disclosed contents of the present disclosure. The processor 802 may also be a combination that implements computing functions, for example, the processor 802 includes a combination of one or more microprocessors, a combination of a DSP (digital signal processor) and a microprocessor, or the like.

The communication interface 803 is configured to connect to other devices through a communication network. The communication network may be the Ethernet, a wireless access network, a wireless local area networks (WLAN), or the like.

In an embodiment, the memory 801 may exist independently from the processor 802, and the memory 801 may be connected to the processor 802 through the bus 804 for storing instructions or program codes. When the processor 802 invokes and executes instructions or program codes stored in the memory 801, the processor 802 may implement the information processing mode determination method provided in the embodiments of the present disclosure.

In an embodiment, the memory 801 may be integrated with the processor 802.

The bus 804 may be an extended industry standard architecture (EISA) bus, or the like. The bus 804 may be classified as an address bus, a data bus, a control bus, or the like. For ease of representation, only one thick solid line is used in FIG. 8 for representing the bus 804, but it does not indicate that there is only one bus or one type of bus.

Through the description of the above implementations, those of ordinary skill in the art can clearly understand that for the convenience and simplicity of the description, the division of the above functional modules is given merely as an example. In practical applications, the above functions can be allocated to different functional modules according to requirements, that is, the internal structure of the second node or first node may be divided into different functional modules to complete all or part of the functions described above.

A computer-readable storage medium is further provided in the embodiments of the present disclosure. All or part of the processes in the above method embodiments may be implemented by relevant information of an information hardware instructed by computer instructions. The programs may be stored in the above-mentioned computer-readable storage medium, and when executed, the programs may include the processes as described in the above method embodiments. The computer-readable storage medium may be an internal storage unit of the first node or a second node provided in any one of the aforementioned embodiments, such as a hard disk or a memory of a computer device. The above-mentioned computer-readable storage medium may also be an external storage device of the above-mentioned second node or first node, such as a plug-in hard disk, a smart media card (SMC), a secure digital (SD) card, a flash card, etc., equipped on the above-mentioned second node or first node. Furthermore, the above-mentioned computer-readable storage medium may include both an internal storage unit and an external storage device of the above-mentioned second node or first node. The above-mentioned computer-readable storage medium is configured to store the above-mentioned computer programs and other programs and data required by the above-mentioned second node or first node. The computer-readable storage medium may further be configured to temporarily store data that has been output or is to be output. The above-mentioned computer-readable storage medium may include a non-transitory computer-readable storage medium.

A computer program product is further provided in the embodiments of the present disclosure. The computer program product includes computer programs that, when run on a computer, enable the computer to execute any one of the information processing mode determination method provided in the above-mentioned embodiments.

Although the present disclosure is described herein in conjunction with various embodiments, other variations of the disclosed embodiments may be understood and implemented by those skilled in the art by viewing the accompanying drawings, the disclosed contents, and the attached claims during the implementation of the present disclosure claimed to be protected. In the claims, "comprise/comprises/comprising" does not exclude other components or steps, and "a/an" or "one" does not exclude a number of a plurality. A single processor or other units may implement couples of functions listed in the claims. Some measures are recorded in different dependent claims, but this does not mean that these measures cannot be combined to produce good results.

Although the present disclosure is described in conjunction with specific features and embodiments thereof, obviously, various modifications and combinations can be made thereto without departing from the spirit and scope of the present disclosure. Accordingly, the specification and accompanying drawings herein are merely exemplary illustration of the present disclosure defined by the claims and are deemed to cover any and all modifications, variations, combinations or equivalents within the scope of the present disclosure. Obviously, those skilled in the art can make various changes and modifications to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

The foregoing descriptions are merely specific implementations of the present disclosure, but the protection scope of the present disclosure is not limited thereto. Any variations or replacements within the technical scope disclosed in the present disclosure shall fall within the protection scope of the present disclosure. Therefore, the protection scope of the present disclosure shall be subject to the protection scope of the claims.

## Claims

1. A data set sending method, **characterized in that** the method is applied to a first node, and comprises:
acquiring a first data set and a first signaling, wherein the first data set comprises N samples, N is a positive integer; and
sending the first data set on a first transmission resource determined according to the first signaling.

2. The method according to claim 1, wherein the method further comprises:
acquiring description information of the N samples; and
sending the description information of the N samples.

3. The method according to claim 2, wherein description information of a sample includes at least one of: received reference signal quality related information, a confidence, a motion speed of the first node, location information of the first node, transmission time related information, angle related information, sample quantization accuracy, a sample normalization type, a sample numerical value range, a sample array dimension, or a sample array arrangement type.

4. The method according to claim 2, wherein the method further comprises: sending the description information of the N samples on the first transmission resource, or sending the description information of the N samples on a second transmission resource determined according to a second signaling.

5. The method according to claim 1, wherein a value of N is determined according to at least one of: a capability of the first node, a cache size, computing power, sample quantization accuracy, a modulation and coding scheme (MCS), a reference signal transmission period, a transmission period of the first transmission resource, or a network side signaling.

6. The method according to claim 1, wherein the method further comprises:
acquiring channel quality information;
sending first request information according to the channel quality information.

7. The method according to claim 6, wherein after sending the first request information, the method further comprises:
receiving first response information; and
determining, according to the first response information, to stop sending the first data set or to continue sending the first data set on the first transmission resource.

8. The method according to claim 1, wherein the method further comprises:
acquiring a time threshold; and
determining whether to clear the first data set according to the time threshold and time for transmitting the first data set.

9. The method according to claim 8, wherein the time threshold is determined according to one of:
a received third signaling;
timeliness of the first data set;
a cache size.

10. The method according to claim 1, wherein the first signaling is a high-layer signaling and a physical layer signaling, the method further comprises:
receiving a fourth signaling, wherein the fourth signaling is used to activate or deactivate the first transmission resource.

11. The method according to claim 1, wherein the first signaling is a dynamic grant signaling, and before sending the first data set, the method further comprises:
sending resource scheduling request information, wherein the resource scheduling request information is used to request the first transmission resource.

12. The method according to claim 1, wherein the sending the first data set on the first transmission resource determined according to the first signaling comprises:
encoding the N samples of the first data set into a coding block;
sending the coding block on the first transmission resource determined according to the first signaling.

13. The method according to claim 12, wherein the N samples of the first data set are encoded into a coding block, the coding block comprises K coding block portions, and the K coding block portions of the coding block are sent in K slots, wherein K is a positive integer greater than 1.

14. The method according to claim 12, wherein the N samples of the first data set are encoded into K coding blocks, and the K coding blocks are sent in K slots, wherein K is a positive integer greater than 1.

15. The method according to claim 12, wherein the encoding the N samples of the first data set into the coding block comprises:
encoding M samples among the N samples into the coding block based on a first MCS, wherein the first MCS is an MCS indicated by the first signaling, and M is a positive integer less than or equal to N.

16. The method according to claim 15, wherein the first transmission resource comprises a first portion and a second portion, and the method further comprises:
sending the coding block on the first portion of the first transmission resource, and sending padding information, data or a signaling other than the N samples on the second portion of the first transmission resource.

17. The method according to claim 16, wherein a sending content on the second portion of the first transmission resource is determined according to a number of bits of the coding block and a number of bits corresponding to the first transmission resource.

18. The method according to claim 12, wherein the encoding the N samples of the first data set into the coding block comprises:
encoding M samples among the N samples into the coding block based on a second MCS, wherein M is a positive integer less than or equal to N;
wherein an index of the second MCS is smaller than an index of a first MCS, and the first MCS is an MCS indicated by the first signaling.

19. The method according to claim 18, wherein the second MCS is determined according to one of: the first node, or a received fifth signaling.

20. The method according to claim 12, wherein the method further comprises:
in response to that the coding block or a coding block portion in the coding block is sent incorrectly, re-transmitting the coding block or the coding block portion.

21. The method according to claim 20, wherein a maximum number of re-transmissions is determined according to a capability of the first node.

22. A data set receiving method, **characterized in that** the method is applied to a first node, and comprises:
receiving a sixth signaling;
receiving a second data set on a third transmission resource determined according to the sixth signaling, wherein the second data set comprises R samples, R is a positive integer.

23. The method according to claim 22, wherein the method further comprises:
acquiring description information of the second data set, wherein the description information of the second data set includes at least one of: an identifier of the second data set, function description information, capability information of the first node, or a transmission type.

24. The method according to claim 23, wherein the description information of the second data set is received on the third transmission resource determined according to the sixth signaling or a fourth transmission resource determined according to a seventh signaling.

25. The method according to claim 22, wherein the method further comprises:
acquiring performance information;
sending second request information according to the performance information, wherein the second request information is used to request a new second data set.

26. The method according to claim 22, wherein the receiving the second data set on the third transmission resource determined according to the sixth signaling comprises:
receiving the second data set on the third transmission resource in a broadcasting manner, or receiving the second data set on the third transmission resource in a user-specific manner, or receiving the second data set on the third transmission resource in a user group-specific manner.

27. A data set receiving method, **characterized in that** the method is applied to a second node, and comprises:
sending a first signaling;
receiving a first data set on a first transmission resource determined according to the first signaling, wherein the first data set comprises N samples, N is a positive integer.

28. The method according to claim 27, wherein the method further comprises:
receiving description information of the N samples, wherein description information of a sample includes at least one of: received reference signal quality related information, a confidence, a motion speed of the first node, location information of the first node, transmission time related information, angle related information, sample quantization accuracy, a sample normalization type, a sample numerical value range, a sample array dimension, or a sample array arrangement type.

29. A data set sending method, **characterized in that** the method is applied to a second node, and comprises:
sending a sixth signaling;
sending a second data set on a third transmission resource determined according to the sixth signaling, wherein the second data set comprises R samples, R is a positive integer.

30. The method according to claim 29, wherein the method further comprises:
sending description information of the second data set, wherein the description information of the second data set includes at least one of: an identifier of the second data set, function description information, capability information of the first node, or a transmission type.

31. The method according to claim 29, wherein the receiving the second data set on the third transmission resource determined according to the sixth signaling comprises:
sending the second data set on the third transmission resource in a broadcasting manner, or sending the second data set on the third transmission resource in a user-specific manner, or sending the second data set on the third transmission resource in a user group-specific manner.

32. A communication system, wherein the communication system comprises at least one first node and at least one second node, a first node is configured to perform the method according to any one of claims 1 to 26, and a second node is configured to perform the method according to any one of claims 27 to 31.

33. An electronic device, **characterized by** comprising: a memory and a processor, wherein the memory is coupled to the processor, the memory is configured to store instructions executable for the processor, and the processor is configured, upon the instructions being executed, to perform the method according to any one of claims 1 to 31.

34. A computer-readable storage medium, wherein computer instructions are stored on the computer-readable storage medium, in response that the computer instructions are executed on an electronic device, the electronic device is enabled to perform the method according to any one claims 1 to 31.
